# EUROPÄISCHE PATENTANMELDUNG

(11) **EP 0 995 904 A2**
(43) Veröffentlichungstag der Anmeldung: **26.04.2000**
(21) Anmeldenummer: 99120771.3
(22) Anmeldetag: 20.10.1999
(51) Int. Cl.: F03D 7/02

(54) **Windkraftanlage**

(30) Priorität: 20.10.1998 DE 19849365
(71) Anmelder: Tacke Windenergie GmbH, 48499 Salzbergen (DE)
(72) Erfinder: Weitkamp, Roland, 49080 Osnabrück (DE)
(74) Vertreter: Hilleringmann, Jochen, Dipl.-Ing.

(57) **Zusammenfassung**

Windkraftanlage mit einem Rotor, der mindestens zwei Blätter mit verstellbaren Anstellwinkeln aufweist und einem Aufnehmer, welcher eine Messgröße liefert, die ein Maß für die aktuelle Belastung eines Elements der Struktur der Anlage bildet, wobei der Anstellwinkel in Abhängigkeit von der Messgröße verändert wird, die eine Beschleunigung oder Verformung des Bauelements repräsentiert, die über einen entsprechenden Aufnehmer erfasst wird und ein Maß für eine Kraft oder ein Moment bildet, wobei der Aufnehmer in einem Rotorblatt vorgesehen ist und/oder die Rotorblätter einzeln verstellbar sind.

## Beschreibung

Die Erfindung betrifft eine Windkraftanlage gemäß dem Oberbegriff des Anspruchs 1.

Bei großen Windkraftanlagen (WKA) werden die maschinenbaulichen Komponenten nicht nach den durch den Wind erzeugten mittleren Lasten dimensioniert, sondern fast ausschließlich durch die aus der ständigen Schwankungen der Windlast hervorgerufenen Lastschwingweiten und Lastspitzen (Extrem-lasten).

In der Vergangenheit sind vielfach Versuche unternommen worden, die Belastungsschwankungen mittels Gelenken an den lastübertragenden Komponentenschnittstellen zu reduzieren. Beispiele hierfür sind die in der Hubschraubertechnik üblichen Schlag- und Schwenkgelenke oder die Einführung der Pendelnabe für Zweiblattrotoren.

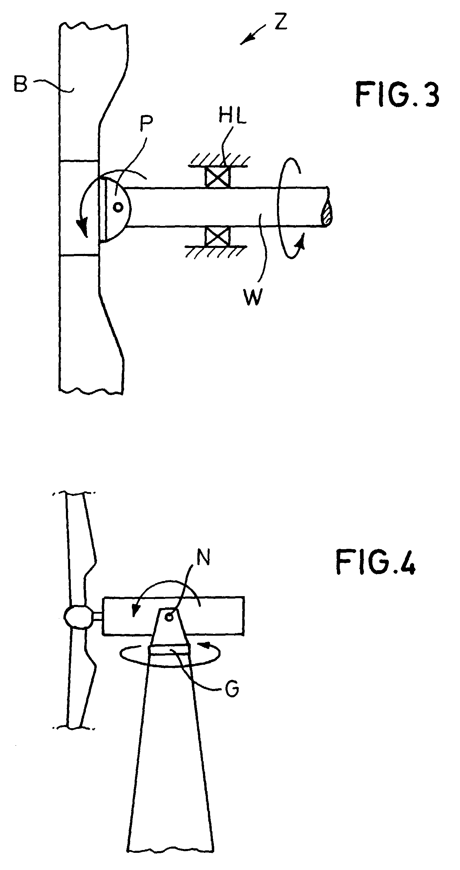

Eine weitere Variante wurde mit einer britischen Versuchsanlage realisiert, bei der die Gelenke vom drehenden System in das stehende System verlagert wurden (s. Fig 4). Dort sind dann zwei senkrecht aufeinander stehende Gelenke Gier- und Nicklager erforderlich, die die gesamte Maschinengondel elastisch lagern. All diese Konzepte sind bislang daran gescheitert, dass die Gelenke bei böigem Wind häufig in die aus geometrischen Gründen erforderlichen Anschläge schlagen.

Ein anderer Ansatz zur Reduzierung der dynamischen Lastanteile ist die beispielsweise aus der Antriebstechnik bekannte aktive Dämpfung von Triebstrangschwingungen durch einen abgestimmten Regelkreis. Bei drehzahlvariablen WKA ist dieses bereits realisiert.

Weiterhin ist es aus der deutschen Offenlegungsschrift DE 33 08 566 A1 bekannt, auf dem Turm einer Windkraftanlage einen Beschleunigungsmesser vorzusehen, welcher über ein Blatteinstellreferenzsignal eine Verstellung der Rotorblätter und damit eine aerodynamischer Dämpfung des Turms erzeugt.

Selektives Pitchen der Rotorblätter zwecks Reduktion von Gier- oder Nickmomenten bei Windkraftanlagen ist aus DE-U-297 15 248, DE-U-297 15 249, DE-A-197 39 162 und DE-A-197 39 164 bekannt, die sämtlich nicht zum Stand der Technik nach Artikel 54(3) EPÜ zählen.

Der Erfindung liegt daher die Aufgabe zugrunde, ein System zur Reduktion der im Betrieb auftretenden Lastschwankungen zu entwickeln, welches einerseits feinfühliger und andererseits selektiver bei örtlichen Windböen arbeitet.

Diese Aufgabe wird erfindungsgemäß dadurch gelöst, dass der Aufnehmer in einem Rotorblatt vorgesehen ist bzw. dadurch, dass die Rotorblätter einzeln verstellbar sind.

Wenn mindestens ein Aufnehmer unmittelbar im Rotorblatt vorgesehen ist, werden Belastungsschwankungen erkannt und können ausgeregelt werden, bevor sie die übrige Konstruktion erreichen. Die Auswirkungen auf die Konstruktion können aufgrund von gemessenen oder Erfahrungs-Werten vorausberechnet und die Blattanstellwinkel so begrenzt werden, dass vorgegebene Belastungen nicht überschritten werden. Andererseits wird dabei ein Blattanstellwinkel eingehalten, welcher ausreichend ist, um den Leistungsbedarf des Generators zu decken. Die vorgestellte Lösung dient also in erster Linie dazu, dynamische Spitzenbelastungen von Bauelementen zu senken, ohne die Leistungsausbeute der Anlage wesentlich herabzusetzen.

Durch selektive Einzelverstellung der Rotorblätter in Abhängigkeit von deren Winkelposition können die Kraftwirkungen auf die nachgeordneten Anlagenteile richtungsabhängig bestimmt werden, so dass die Belastungen um einzelne räumliche Achsen selektiv kontrolliert werden können.

Dabei ist ersichtlicherweise nicht die Herabsetzung der Torsion der Antriebswelle des Generators das Ziel, sondern die dynamische Verringerung der Maximalbelastungen der konstruktiven Bauelemente, welche die Reaktionskräfte der auf den Rotor einwirkenden Windkräfte aufnehmen. Hierbei ist zu beachten, dass die Belastungen der konstruktiven Elemente insgesamt zu betrachten ist, d.h. die Entlastung eines Bauelements kann die Belastung eines anderen bedeuten. Die Lastbegrenzung durch selektive Verstellung der Blätter ist daher so zu wählen, dass die maximale Lastbegrenzung für jedes der Bauelemente eingehalten wird. Es ist also eine Gewichtung günstig, welche eine "programmierte" selektive Verstellung der Blätter in der Weise steuert, dass die Spitzenlasten für die konstruktiven Bauelemente insgesamt herabgesetzt sind.

Damit kann die konstruktive Auslegung insgesamt so erfolgen, dass durch Begrenzung der Spitzenbelastungen die mittleren Belastungen bei Anlagen insgesamt höher sind, so dass bei gleicher konstruktiver Auslegung höhere Energieerträge möglich sind, oder, alternativ, bei gleichem Energieertrag eine wirtschaftlichere Bauweise realisiert werden kann.

Bei einer bevorzugten Weiterbildung der erfindungsgemäßen Windkraftanlage ist eine Regelvorrichtung vorgesehen, welche den Anstellwinkel des Blattes oder der Blätter derart verändert, dass die Messgröße oder eine in einem dem Bauelement vorgeschalteten Bauelement auftretende und aufgrund der konstruktiven Gegebenheiten auf der Basis der Messgröße korrigierte Rechengröße oder eine aus mehreren einzelnen derartigen Rechengrößen kumulierte Größe von einem vorgegebenen Wert, insbesondere zeitlichen Mittelwert, nicht über ein vorgegebenes Maß hinaus abweicht.

Bei den genannten Bauelementen handelt es sich insbesondere um ein Rotorblatt, die Rotorwelle, die Generatorgondel und/oder den Turm und dessen Fundament (bei On-Shore-Anlagen) bzw. Gründung (bei Off-Shore-Anlagen).

Bei einer vorteilhaften Weiterbildung ist insbesondere die Wirkung der Regelvorrichtung abhängig von der Winkelposition des Blattes in Abhängigkeit von der Rotorstellung.

Konkret umgesetzt wird dies durch eine Regelvorrichtung, welche online im Anlagenbetrieb aufgrund von messbaren Größen die dynamischen Anlagenbelastungen mit den vorhandenen Regelparametern ausregelt oder zumindest erheblich herabsetzt. Infrage kommende Regelparameter sind im wesentlichen die Blattwinkel der einzelnen Blätter (kollektives und selektives Pitchen), die Rotordrehzahl, das Generatormoment (bei drehzahlvariablen Generatorsystemen) und der Azimutwinkel (Windnachführwinkel).

Mit dieser Regelvorrichtung ist es bevorzugt auch möglich, die weiter oben geschilderten Ansätze der gelenkigen Lagerung umzusetzen, wenn die Bewegung im Gelenk und deren zeitliche Ableitungen als Eingangsgrößen für die Regelvorrichtung genutzt werden. Besonders günstig ist hier die Variante des freien Gier- oder Azimutlagers (free yaw genannt), da dort keine Anschläge erforderlich sind, um den Drehwinkel zu begrenzen. Dieses System hat den zusätzlichen Vorteil, dass das bei Luvläufern (Rotor auf der windzugewandten Seite des Turms) erforderliche Azimutsystem zur Windnachführung weitgehend entfallen kann, die Nachführung wird aerodynamisch durch selektives Pitchen realisiert.

Andere vorteilhafte Weiterbildungen der Erfindung sind in den Unteransprüchen angegeben bzw. werden nachstehend zusammen mit der Beschreibung der bevorzugten Ausführung der Erfindung anhand der Figuren näher dargestellt. Es zeigen:
Figur 1 als bevorzugtes Ausführungsbeispiel der Erfindung einen Windkraftgenerator mit Kraft- bzw. Momentaufnehmern an verschiedenen Baugruppen.
Figur 2 ein schematisches Blockschaltbild des in Figur 1 dargestellten Ausführungsbeispiels,
Figur 3 eine erste Variante des in Figur 1 dargestellten Ausführungsbeispiels,
Figur 4 eine zweite Variante des in Figur 1 dargestellten Ausführungsbeispiels sowie
Figuren 5A und 5B eine tabellarische Aufstellung der dynamischen Belastungskomponenten, ihrer Ursachen, des Kosteneinflusses sowie ihrer Mess- und Stellgrößen.

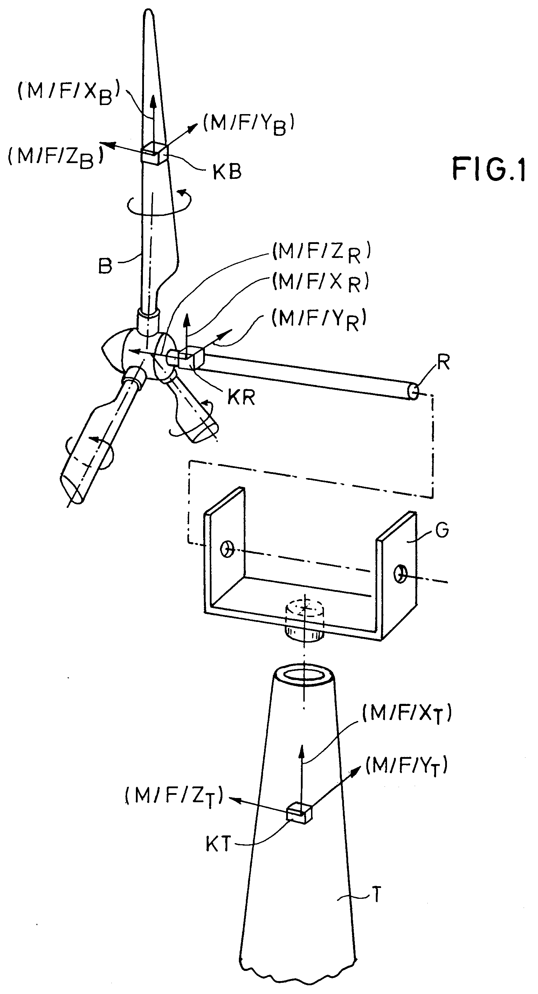

Bei dem in Figur 1 dargestellten Ausführungsbeispiel eines Windkraftgenerators mit Kraft- bzw. Momentaufnehmern KB, KR, KT an verschiedenen Baugruppen sind die Momenten- (M) bzw. Kraft- (F) Koordinaten-Richtungen x,y,z der Komponenten Blatt B, Rotorachse R in der Gondel G und Turm T dargestellt. Am Fußpunkt der Koordinatensysteme befinden sich Messwertaufnehmer für lokale, in den Bauelementen anstehende Kräfte oder Momente, welche die aktuelle Belastung repräsentieren und beispielsweise in Form von Dehnungsmessstreifen vorgesehen sind. Anstelle der Kraft- oder Momentenaufnehmer können auch Beschleunigungssensoren vorgesehen sein, welche bereits die Bewegungen aufnehmen (nach zweimaliger Integration des Messwerts), die zu dem Lastzustand führen. Bei einem Rotorblatt wirken Lasten durch Böen zu einer Beschleunigung in Richtung -z_{B}, und damit auch zu einer Verformung in -z-Richtung.

Das Getriebe und der elektrische Generator sind in Figur 1 aus Gründen der Übersichtlichkeit fortgelassen worden. Entsprechendes gilt für die Verstellantriebe der Rotorblätter.

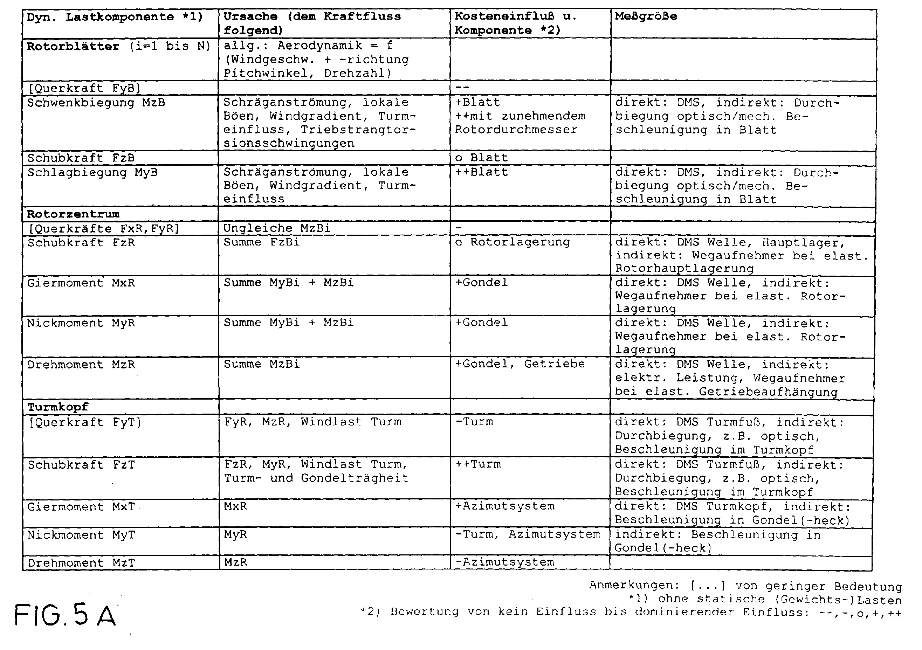

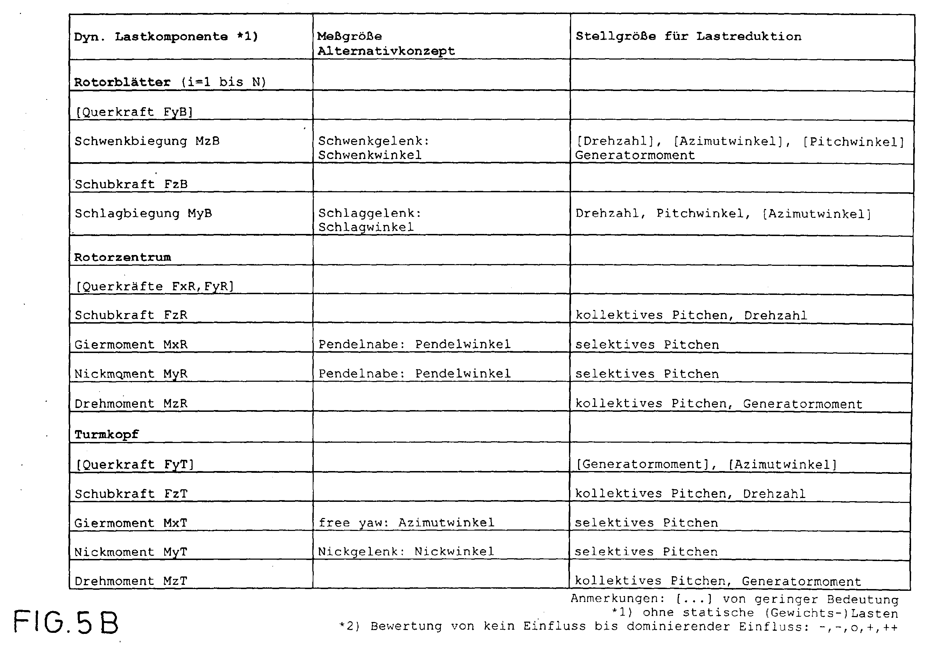

Die Auswirkungen der verschiedenen über die Messwertaufnehmer ermittelten Größen sind weiter unten in Figur 5 dargestellt.

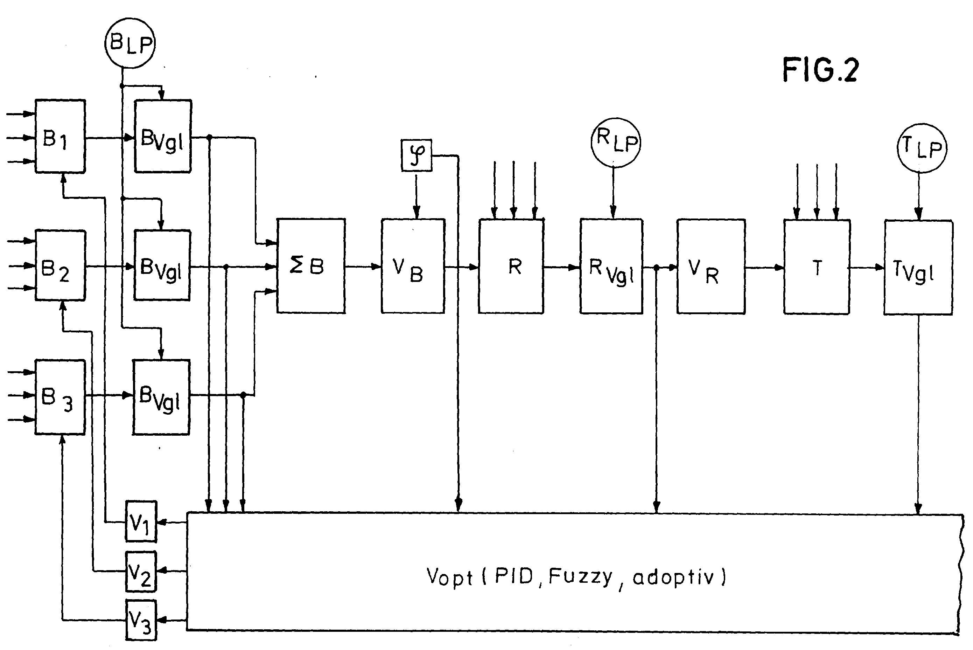

Bei dem in Figur 2 dargestellten schematischen Blockschaltbild eines Regelkreises für das Ausführungsbeispiel nach Fig. 1 sind die drei jeweils mit Last- bzw. Beschleunigungsaufnehmern KB bestückten Rotorblätter mit B₁ bis B₃ bezeichnet. Die Ausgangssignale dieser Lastaufnehmer werden in Vergleichseinheiten B_{Vgl} mit einem maximal zulässigen Rotorblatt-Lastprofil B_{LP} verglichen. Bei einem recht einfachen Regelkonzept wird dann, wenn für ein Rotorblatt dieses Lastprofil überschritten wird, das Ausgangssignal der Vergleichseinheit B_{Vgl} in dem Regler Vₒₚₜ zur sofortigen Verstellung des betreffenden Rotorblatts durch Ansteuerung des zugehörigen Stellantriebs V_{1/2/3} verarbeitet. In einer verfeinerten Ausführungsform erfolgt die Verstellung in diskreten Stufen: Unterhalb eines durch das Lastprofil vorgegebenen unteren Grenzwertes erfolgt keinerlei lastreduzierende Verstellung. Oberhalb eines oberen Grenzwertes erfolgt wie o.g. eine sofortige Verstellung. In dem Zwischenbereich erfolgt eine lastabhängige Verstellung durch den Regler Vₒₚₜ mit dem Ziel, die Betriebsbelastungen für das Gesamtsystem ohne nennenswerten Ertragsverlust auf ein Minimum zu reduzieren.

Eine weitere Verbesserung des Regelalgorithmus wird erzielt, wenn durch Verwendung von Fuzzy- oder adaptiver Regelungskonzepte keine diskreten Grenzwerte vorgegeben werden, sondern gleitende Übergänge zwischen den einzelnen oben beschriebenen Vorgehensweisen geschaffen werden.

Zudem werden die Belastungs-Messsignale der Lastaufnehmer B₁ bis B₃ einer Summationsschaltung Σ_{B} zugeführt, und deren Ausgangssignal in Abhängigkeit von der Drehstellung des Rotors in einer Verrechnungseinheit V_{B} verrechnet, um die Auswirkungen der Rotorbelastungen auf den Lastaufnehmer KR der Rotorwelle zu ermitteln. Es erfolgt also eine (rechnerische) Übertragung der Belastungen der Rotorblätter auf die Rotorachse (auch Triebstrang genannt). Die Rotorachse selbst ist optional mit dem Lastaufnehmer KR versehen, der neben den auf den Rotor zurückzuführenden Belastungen auch andere Belastungen, z.B. Torsionsschwingungen, aufnimmt, die möglicherweise nicht aus den Rotorblattbelastungen zu errechnen sind. Der optionale Last- bzw. Beschleunigungsaufnehmer KR der Rotorwelle erhöht also die Genauigkeit der in den Regler Vₒₚₜ eingespeisten Ist-Belastungen.

Die Summe sämtlicher vom Lastaufnehmer KR erfasster Belastungen wird in einer Vergleichereinheit R_{Vgl} mit einem vorgegebenen maximalen Rotorachsen-Belastungsprofil verglichen. Das Ausgangssignal dieses Vergleichs wird auf den Regler Vₒₚₜ gegeben, und darüber hinaus einer Verrechnungseinheit V_{R} zugeführt, die die Rotorachsenbelastungen in sich auf den Turm auswirkende Belastungen umrechnet. Die sich auf den Turm auswirkenden Belastungen, die bei optionaler Anordnung des Last- bzw. Beschleunigungsaufnehmers KT um von diesem messtechnisch erfasste, gegebenenfalls nicht durch Verrechnung der sich aus der Rotorwellenbelastung ermittelbaren Belastungen ergänzt sind, werden schließlich wieder mit einem vorgegebenen maximal zulässigen Turm-Belastungsprofil verglichen. Das Ergebnis dieses Vergleichs wird dem Regler V_{Vpt} zugeführt.

Die Belastungsprofile B_{LP}, R_{LP} und T_{LP} sind nicht notwendigerweise konstant, sondern können insbesondere in Abhängigkeit von dem Betriebszustand und/oder der Betriebsdauer der WKA und der Anzahl und Größe an bis zum jeweiligen Betriebszeitpunkt aufgetretenen Lastwechseln verändert und angepasst werden.

In Fig. 2 ist ein Regelkreis dargestellt, bei dem durch die Verrechnungseinheit V_{B}, V_{R} die Belastungen der einen Baueinheit der WKA auf die mit dieser unmittelbar gekoppelten Baueinheit (also vom Rotor auf den Triebstrang und vom Triebstrang auf den Turm) rechnerisch übertragen werden. Zwingend erforderlich ist dies jedoch nicht, da in jeder Baueinheit der WKA Lastaufnehmer vorhanden sein können. Insoweit könnte auf die Verbindung zwischen V_{B} und KR sowie V_{R} und KT verzichtet werden. Wie bereits oben erwähnt, könnte man auch auf die Last- oder Beschleunigungsaufnehmer KR und KT der Rotorachse R und des Turms T verzichten. Die Belastungen der Baugruppen Triebstrang, Gondel und Turm würden dann durch Verrechnung der auf die Rotorblätter wirkenden, messtechnisch erfassten Belastungen ermittelt.

Durch eine sequentielle Verarbeitung im Regelkreis werden also Grenzbelastungen in allen konstruktiven Teilen vermieden. Vorteilhaft ist es, die Belastungszustände sämtlicher Baueinheiten der WKA gleichzeitig messtechnisch oder rechnerisch zu ermitteln.

Sämtliche von den Vergleichseinheiten gelieferten Signale gehen in den Regler Vₒₚₜ ein, wo sie in Abhängigkeit von Regelvorschriften (entweder deterministisch oder nicht deterministisch, digital oder analog, mittels PID-, Fuzzy- oder adaptiver Regelkonzepte) in Ansteuersignale zur Einzelansteuerung der Drehstellung der Rotorblätter umgesetzt werden. Diese Verarbeitung erfolgt in Abhängigkeit von der Rotorstellung ϕ und für die einzelnen Blätter getrennt, so dass eine optimale Anpassung möglich ist. Auf diese Weise ist auch eine exakte Anpassung an das lokale Windfeld möglich, welches die Rotorebene erreicht. Mittels nicht dargestellter Speicher kann jeweils auf Belastungsdaten des letzten Blattes in der betreffenden Position zurückgegriffen werden. Dies wird durch Verzögerungselemente erreicht, welche (entsprechend der aktuellen Rotationsgeschwindigkeit) zyklisch die Daten von B1 in Richtung auf B2 und B3 und wieder an B1 weitergeben.

Mit anderen Worten können also die aktuellen Rotorblattparameter (Einstellwinkel, Windbelastung), die innerhalb eines Drehwinkelbereichs des Rotors gelten, auf das in Rotordrehrichtung nächstfolgende, den Winkelbereich durchfahrende Rotorblatt übertragen werden. Damit kann dessen Verdrehung, sofern erforderlich, schneller, weil sozusagen vorausschauend erfolgend, vorgenommen werden. Somit ist eine noch genauere Anpassung an die jeweiligen Wind- und damit Belastungsverhältnisse möglich.

Zusätzlich zum Pitchwinkel der Rotorblätter wirken sich die vom Regler gelieferten Stellgrößen auf eine Verdrehung der Gondel (Azimut-Winkelveränderung) und durch eine Veränderung des Generatormoments auch auf die Rotordrehzahl aus; die hierfür benötigten Stellantriebe bzw. Schaltelemente sind in Figur 2 nicht eingezeichnet.

Bei der in Figur 3 gezeigten Variante des in Figur 1 dargestellten Ausführungsbeispiels ist dargestellt, dass ein starrer Zweiblattrotor Z, der in einem Hauptlager H gelagert ist und über ein Pendelgelenk P mit den erfindungsgemäßen Maßnahmen sicher betrieben werden kann, wenn das Blatt B1 durch Verstellen (vorzugsweise mittels eines PID-Reglers in Abhängigkeit von dem momentanen Pendelwinkel) jeweils so betrieben wird, dass das Pendelgelenk P nicht zu einem Anschlag gelangen kann. Entsprechend lässt sich auch die Belastung des Hauptlagers H begrenzen, so dass dieses im Vergleich zu herkömmlichen Lagern wesentlich schwächer ausgeführt werden kann, da bekanntlich gerade Stosskräfte zu Lagerschäden führen, welche mit den erfindungsgemäßen Maßnahmen vermieden sind.

Bei der in Figur 4 gezeigten zweiten Variante des in Figur 1 dargestellten Ausführungsbeispiel sind ein Nicklager N und ein Gierlager G vorgesehen, welche ebenfalls von stoßartigen Belastungen freigehalten bzw. in einem vorgegebenen Lastprofil gefahren werden können.

Das Gierlager ist üblicherweise bei Windkraftanlagen mit einer starken Bremse versehen, welche bei den erfindungsgemäßen Anlagen entbehrlich ist, wenn die auf dieses Lager wirkenden Versteilmomente durch die erfindungsgemäßen Maßnahmen herabgesetzt werden. Durch eine Steuerung der Drehstellung der Rotorblätter (Pitch) in Abhängigkeit von ihren jeweiligen Positionen innerhalb jeder Rotorumdrehung kann gänzlich auf ein Gondel-Azimut-Bremssystem verzichtet werden.

Nicht dargestellt ist in der Zeichnung die Möglichkeit, aus der Unsymmetrie der im Rahmen der Erfindung erfolgenden Verstell-(Pitch-)Bewegungen der Blätter ein Signal herzuleiten, welches zu einer (Wieder-)Ausrichtung der Rotorrichtung senkrecht zum Wind einzig und allein durch Verstellung der Rotorblätter führt. Eine über einen gewissen Zeitraum (Minutenbereich) detektierte mittlere Unsymmetrie der zur Belastungsminimierung notwendigen Rotorblattverstellung ist nämlich ein Anzeichen für einen nicht parallel zur Rotorachse erfolgenden Windeinfall. Hierzu wird die Ausregelung einer unsymmetrischen Belastung des Rotors über einen gewissen Zeitraum erfasst. Danach erfolgt eine Verstellung der Gondel durch (überlagertes) zeitlich begrenztes Pitchen, wobei diese Pitch-Überlagerung zeitlich so bemessen ist, dass sich die Gondel in eine Drehposition bewegt, in der unsymmetrische Belastungen im zeitlichen Mittel ausgeglichen sind.

In Figuren 5A und 5B ist eine tabellarische Darstellung verschiedener Parameter und Einflussfaktoren einer Windkraftanlage beschrieben, die es zur Reduktion der Auswirkungen von Belastungsschwankungen auf die einzelnen Baugruppen der Windkraftanlage zu berücksichtigen gilt.

Die durch den Wind hervorgerufenen Lastschwankungen (dynamische Lasten) haben folgende Hauptursachen, die abhängig von der Maschinendynamik mehr oder weniger großen Einfluss haben können:
A. deterministisch:
   1. vertikaler Windgradient (Höhengradient)
   2. Schräganströmung
   3. Turmvorstau / Turmschatten
B. stochastisch (natürliche und windparkinduzierte dreidimensionale Turbulenz)
   1. lokale Böen
   2. turbulenzbedingte vertikale und horizontale Windgradienten

In Figuren 5A und 5B werden, ausgehend von den für die Auslegung von Windkraftanlagen wichtigen Lastkomponenten, die Möglichkeiten zum Aufbau von lastreduzierenden Regelkreisen systematisch dargestellt, welche bestehen, um die Auswirkungen dieser Lastschwankungen zu minimieren bzw. zu dämpfen.

In der ersten Spalte sind dabei die für Windkraftanlagen entscheidenden Lastkomponenten der Richtung des Kraftflusses folgend aufgelistet. Spalte 2 gibt die Hauptursachen für die vorhandenen Lastschwankungen an. Spalte 3 ist eine grobe Bewertung der Kostenrelevanz der einzelnen Lastkomponenten. Die Spalten 4 bis 6 geben die Eingangs- und Ausgangsgrößen für mögliche Regelkreise zur Erfüllung der erfindungsgemäßen Aufgabe an. Die mit 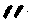 Alternativkonzept" bezeichnete Spalte 5 beinhaltet hierbei die unter Abschnitt 1 erwähnten, bislang erfolglosen Konzepte gelenkiger Komponentenschnittstellen.

Die gewählte Reihenfolge der Lastorte: Rotorblätter, Rotorzentrum, Turmkopf entspricht der Qualität der gemessenen Information:

Steht als erstes Beispiel der Regelvorrichtung das Schlag- und Schwenkmoment (MyB u. MzB) in der Blattwurzel der Blätter als Eingangssignal zur Verfügung, können rechnerisch mit ausreichender Genauigkeit die wichtigen nachfolgenden Lastkomponenten ermittelt werden. Somit kann durch selektives Pitchen (nicht notwendiger Weise zyklisch) ein Lastminimum für das Gesamtsystem erreicht werden. Ein zusätzliches Signal der Turmlängsbeschleunigung würde die Genauigkeit nochmals erhöhen, weil sonst pauschale Annahmen über den (minder wichtigen) Staudruck auf die Turmwandung getroffen werden müssen. Bei den zunehmend eingesetzten sogenannten 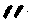 weichen" Türmen, deren Eigenfrequenz kleiner ist als die Rotordrehfrequenz, erlauben Beschleunigungssensoren eine genauere Analyse der aktuellen Turmdynamik.

Stehen in einem zweiten Beispiel hingegen nur die Turmkopflasten aus der Messung der Turmkopfbeschleunigung zur Verfügung, ist die Verteilung der Lastanteile auf die einzelnen Blätter nicht exakt bestimmbar (die Turmkopflasten ergeben sich im wesentlichen aus der Summation der Blattlasten). Eine dem Beispiel 1 etwa vergleichbare Reduzierung der Turmkopflasten wird voraussichtlich mit diesem einfacheren System durch selektives Pitchen noch möglich sein, die Reduzierung der dynamischen Lasten in den Blättern oder der Durchbiegung der Blätter wird aber deutlich geringer ausfallen als im ersten Fall.

Die vorstehend in der Tabelle dargestellten Zusammenhänge sind stark vereinfacht und vernachlässigen das Eigengewicht der Komponenten sowie Einflüsse untergeordneter Bedeutung (z.B. Einflüsse von Trägheits- und Kreiselkräften und durch geometrische Kopplungen wie Konuswinkel, Achsneigung usw.). Insbesondere ist zu berücksichtigen, dass die einzelnen Lastkomponenten nicht unabhängig voneinander geregelt werden können z.B. Abhängigkeit von Schlagmoment MyB und Schwenkmoment MzB). Von elementarer Wichtigkeit ist weiterhin, dass die anvisierten Regelkreise nicht oder nur unwesentlich zur Reduzierung der Leistungsausbeute (Drehmoment MzR*Drehzahl) führen dürfen. Trotz dieser Einschränkungen ist es möglich, die kritischen Lastschwankungen mit den dargestellten Systemen stark zu reduzieren. Hierzu trägt wesentlich bei, dass die größten Lastschwankungen oberhalb der Nennwindgeschwindigkeit entstehen und somit in einem Bereich, bei dem der Rotor ohnehin abgeregelt wird. Die vorhandenen Leistungsreserven im Rotor können somit zu Lastreduzierung genutzt werden.

Der Regler Vₒₚₜ des Regelkreises gemäß Figur 2 arbeitet also bevorzugt nach einer Prioritätenreihenfolge. Die Prioritäten werden z.B. gewichtet nach der Spalte 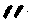 Kosteneinfluss" der Figur 5A, wobei als oberste Priorität die Anlagenintegrität gilt. Mit anderen Worten kommt es dann, wenn die maximal zulässigen Belastungsprofile für die Rotorblattdurchbiegung und die Turmbiegung erreicht sind, in jedem Fall zu einer Einflussnahme auf die WKA durch eine Rotorblattverstellung, um die WKA vor Beschädigungen zu schützen. Diese Verstellung erfolgt z.B. ungeachtet der bei diesem Rotorblatt-Pitchwinkel gegebenen Energieausbeute, die durchaus selbst eine recht hohe Priorität genießt, aber nachranging zur Anlagenintegrität ist.

Eine weitere Verbesserung des Regelverhaltens kann erreicht werden, indem dem Regler Vₒₚₜ direkt Informationen über die Auftriebsverteilung entlang der Rotorblätter als Eingangssignal zur Verfügung gestellt werden. Damit nämlich ist eine genauere Erfassung der Querkräfte an der Blattwurzel möglich. Physikalisch kann dies durch eine Vielzahl von DMS-Elementen entlang der Rotorblätter oder durch Druckmessungen an über die Blattlänge verteilten Bohrungen oder über piezoelektrische druckempfindliche Folien realisiert werden.

Die Erfindung beschränkt sich in ihrer Ausführung nicht auf die vorstehend angegebenen bevorzugten Ausführungsbeispiele. Vielmehr ist eine Anzahl von Varianten möglich, welche von der dargestellten Lösung auch bei grundsätzlich anders gearteten Ausführungen Gebrauch macht.

## Patentansprüche

1. Windkraftanlage mit einem Rotor, der mindestens zwei Blätter mit verstellbaren Anstellwinkeln aufweist und einem Aufnehmer, welcher eine Messgröße liefert, die ein Maß für die aktuelle Belastung eines Elements der Struktur der Anlage bildet, wobei der Anstellwinkel in Abhängigkeit von der Messgröße veränderbar ist, die eine Beschleunigung oder Verformung des Bauelements repräsentiert, welche über einen entsprechenden Aufnehmer erfassbar ist und ein Maß für eine Kraft oder ein Moment bildet,
**dadurch gekennzeichnet,**
dass der Aufnehmer in einem Rotorblatt vorgesehen ist und/oder dass die Rotorblätter einzeln verstellbar sind.

2. Windkraftanlage nach Anspruch 1, dadurch gekennzeichnet, dass eine Regelvorrichtung vorgesehen ist, welche den Anstellwinkel des Blattes oder der Blätter derart verändert, dass die Messgröße oder eine in einem dem Bauelement vorgeschalteten Bauelement auftretende und aufgrund der konstruktiven Gegebenheiten auf der Basis der Messgröße korrigierte Rechengröße oder eine aus mehreren einzelnen derartigen Rechengrößen kumulierte Größe ausgehend von einem insbesondere veränderbaren Wert, insbesondere einem zeitlichen Mittelwert, nicht über ein vorgegebenes Maß hinaus abweicht.

3. Windkraftanlage nach Anspruch 1 oder 2, dadurch gekennzeichnet, dass es sich bei den Bauelementen um ein Rotorblatt, die Rotorwelle, die Generatorgondel und/oder den Turm handelt.

4. Windkraftanlage nach Anspruch 1 oder 2, dadurch gekennzeichnet, dass die Wirkung der Regelvorrichtung abhängig ist von der Winkelposition des Blattes in Abhängigkeit von der Rotorstellung.

5. Windkraftanlage nach einem vorangehenden Anspruch, dadurch gekennzeichnet, dass bei zunehmender Beschleunigung, zunehmendem Moment, zunehmender Kraft oder zunehmender Verformung der aerodynamische Anstellwinkel verringert wird.

6. Windkraftanlage nach einem der vorhergehenden Ansprüche, dadurch gekennzeichnet, dass die Messgröße die Beschleunigung, die Kraft oder Verformung eines Blattes oder der Antriebswelle bildet.

7. Windkraftanlage nach einem der vorhergehenden Ansprüche, dadurch gekennzeichnet, dass mindestens eine zusätzliche Messgröße herangezogen wird und die beiden Messgrößen gemeinsam weiterverarbeitet werden.

8. Windkraftanlage nach einem der vorhergehenden Ansprüche, dadurch gekennzeichnet, dass bei einer mehrstufigen Verarbeitung von der Belastung einer konstruktiv dem Rotor näher gelegenen Baugruppe auf die Belastung einer weiter davon entfernt gelegenen Baugruppe geschlossenen wird.

9. Windkraftanlage nach einem der vorhergehenden Ansprüche, dadurch gekennzeichnet, dass der Anstellwinkel für einzelne Blätter für verschiedene Winkelstellungen selektiv veränderlich ist.

10. Windkraftanlage nach einem der vorhergehenden Ansprüche, dadurch gekennzeichnet, dass Verzögerungs- oder Speichermittel vorgesehen sind, welche Beschleunigungs- oder Lastsignale von einer einem ersten Rotorblatt zugeordneten Verarbeitungsstufe zu einer einem in der Drehrichtung folgenden Rotorblatt zugeordneten Verarbeitungsstufe mit einer Verzögerungszeit weiterleiten, welche der Zeitdauer entspricht, welches das folgende Rotorblatt bei der aktuellen Rotationsgeschwindigkeit benötigt, um in die Position des vorangehenden Rotorblattes zu gelangen (zyklisches selektives Pitchen).

11. Windkraftanlage nach einem der vorhergehenden Ansprüche, dadurch gekennzeichnet, dass Mittel vorgesehen sind, um durch selektive Verstellung der Rotorblätter ein übermäßiges Ausschwingen einer Pendelnabe oder eines Nickgelenks zu verhindern.

12. Windkraftanlage nach einem der vorhergehenden Ansprüche, dadurch gekennzeichnet, dass durch selektive Verstellung einzelner Rotorblätter eine Gierbewegung der Rotorachse begrenzt wird.

13. Windkraftanlage nach Anspruch 12, dadurch gekennzeichnet, dass über eine Symmetrierung des zum Kraftausgleich auf nachfolgende Baugruppen erforderlichen selektiven Verstellens der Rotorblätter durch aktive Verstellung der Rotorblätter eine verdrehung der Gondel um eine senkrecht zur Rotorachse gerichtete Achse und damit eine Ausrichtung der Rotorachse senkrecht zum Wind erfolgt.
